# EUROPEAN PATENT APPLICATION

(11) **EP 2 617 635 A1**
(43) Date of publication of application: **24.07.2013**
(21) Application number: 12151503.5
(22) Date of filing: 18.01.2012
(51) Int. Cl.: B62M 3/08

(54) **Modularized bicycle pedal**

(71) Applicant: VP Components Co., Ltd., Taichung City 43865 (TW)
(72) Inventor: Lin, Wen-Hwa, 43865 Taichung City (TW)
(74) Representative: Viering, Jentschura & Partner

(57) **Abstract**

A modularized bicycle pedal (1) includes a pedal body (10) and a shaft module (20). The pedal body (10) has a connecting side (11) provided with a socket portion (12). The shaft module (20) includes a circular enclosure (21), a shaft core (22) and plural rolling units (23). The enclosure (21) has a circular inner surface (211) that defines a through hole (213). The enclosure (21) is received in the socket portion (12) and coupled to the pedal body (10). The shaft core (22) partially protrudes into the through hole (213). The shaft core (22) has a connecting segment (221) and a first sustaining segment (222). The connecting segment (221) is configured to connect the crank. The rolling units (23) are rotatably sandwiched by the circular inner surface (211) and the first sustaining segment (222), so that the shaft core (22) is allowed to rotate with respect to the enclosure (21) against an axis (3).

## Description

### BACKGROUND OF THE INVENTION

### 1. Technical Field

The present invention relates to a modularized bicycle pedal according to the preamble of Claim 1. Accordingly, the present invention severally relates to a bicycle pedals and more particularly, to a modularized bicycle that is structurally simplified and compact.

### 2. Description of Related Art

In a bicycle, pedals are provided for a cyclist to pedal and thereby drive the bicycle cranks to in turn drive the chain system and wheels and finally make the bicycle go forward.

One of the conventional pedals is shown in Taiwan Patent No. TW M405404. The prior-art device has a pedal body formed therein with a whole-width shaft hole for rotatably receiving a shaft that has one end coupled to a crank. In such a structure, the shaft extending throughout the width of the pedal body necessarily makes the pedal body thick and heavy and, therefore, tends to hinder the cyclist when he/she is making turns on the bicycle.

For avoiding this inconvenience, Taiwan Patent No. TW M405404 has disclosed a thin pedal by attaching a shaft to merely one side of a pedal body. In particular, the pedal body has an axle and the shaft includes a connector, a first bearing and a second bearing. The first bearing, the connector and the second bearing are mounted around the axle in order, and the assembly is then coupled to a crank. Finally, fixing units are used to secure combination of the pedal body and the shaft. However, one problem with the thin pedal of TW M405404 is that the combination of the components can fall apart anytime before the fixing units are screwed into the axle. Particularly, the connector and bearings of the shaft are not integrated as a module so the in-situ assembling work is troublesome.

Taiwan Patent No. TW M297904 has provided a pedal similar to the one described in the preceding paragraph. In this prior-art pedal, a pedal body has its one side formed with a shaft seat, and a shaft is composed of a core, a sleeve and a plurality of bearings. The core is stepped and the sleeve has its inner periphery provided with a stepped surface. Thereby, after the core and bearings are put into the sleeve in order, a nut screwed with one end of the core serves to hold the bearings and sleeve in position. Although the pedal of TW M297904 is advantageous because the shaft can be preassembled for easy storage and transportation, the core has to be long for accommodating a threaded segment that engages the nut. In addition to the lengthened core, the nut also adds weight to the overall pedal, and this is not conformable to the consumers' pursuit of light and compact bicycle parts.

While Taiwan Patent No. TW M405404 and Taiwan Patent No. TW M297904 have tried to reduce the volume and weight of a pedal by attaching the shaft to merely one side of the pedal body, the bearings are fixed to the shaft core by additional screw means, so there is still a room for further simplifying and lightening bicycle pedals.

### SUMMARY OF THE INVENTION

A primary objective of the present invention is to provide a bicycle pedal featuring a shaft module that can be preassembled and is compact and light.

To achieve these and other objects of the present invention, the invention provides a modularized bicycle pedal according to claim 1. Further embodiments of the invention are described in the dependent claims.

With the foregoing configuration, the disclosed modularized bicycle pedal can have the shaft module preassembled for easy storage and use. Also, in the present invention, the rolling units located immediately between the enclosure and the shaft core preferably serve to prevent the enclosure from axially moving with respect to the shaft core, so the need of using plural bearings and fasteners as existing in the prior art can be eliminated, thereby reducing the overall weight of the pedal.

### BRIEF DESCRIPTION OF THE DRAWINGS

The invention as well as a preferred mode of use, further objectives and advantages thereof will be best understood by reference to the following detailed description of illustrative embodiments when read in conjunction with the accompanying drawings, wherein:
**Figure 1** is a perspective view of a modularized bicycle pedal according to one embodiment of the present invention;
**Figure 2** is an exploded view of the modularized bicycle pedal of **Figure 1**;
**Figure 3** is a perspective view of the modularized bicycle pedal of **Figure 1**, wherein the preassembled shaft module is to be assembled to the pedal body;
**Figure 4** is a lateral view of the modularized bicycle pedal of **Figure 1** assembled with a bicycle crank;
**Figure 5** is a partial, cross-sectional view of the modularized bicycle pedal of **Figure 1**;
**Figure 5A** is an enlarged view of the circled part in **Figure 5**;
**Figure** 6 is a partial, cross-sectional view of the shaft module as shown in **Figure 3**; and
**Figure 6A** is an enlarged view of the circled part in **Figure 6**.

### DETAILED DESCRIPTION OF THE INVENTION

The following preferred embodiments when read with the accompanying drawings are made to clearly exhibit the above-mentioned and other technical contents, features and effects of the present invention. However, the accompanying drawings are intended for reference and illustration, but not to limit the present invention and are not made to scale. Unless otherwise noted, like elements will be identified by identical numbers throughout all figures.

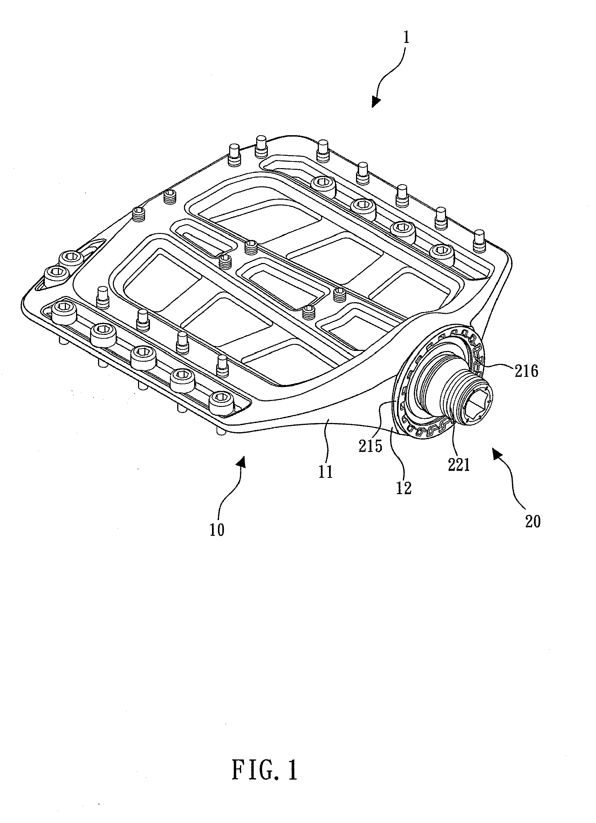

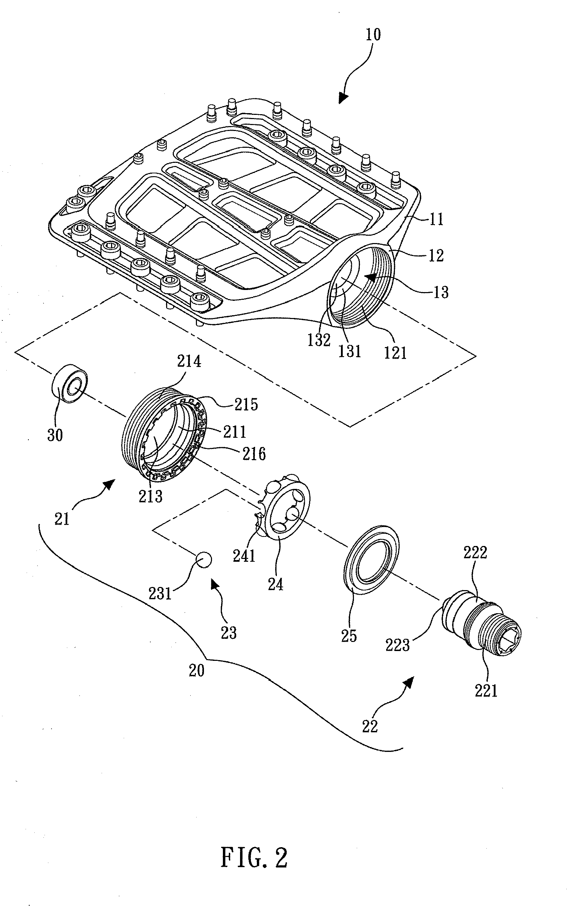

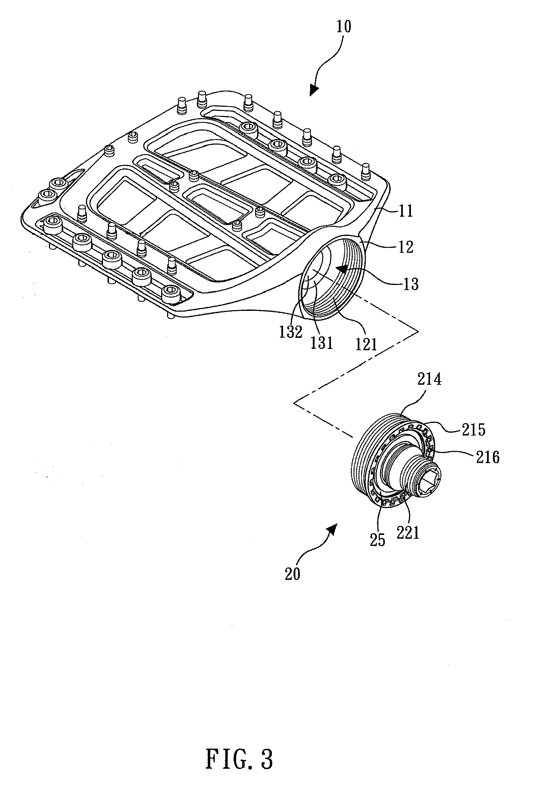

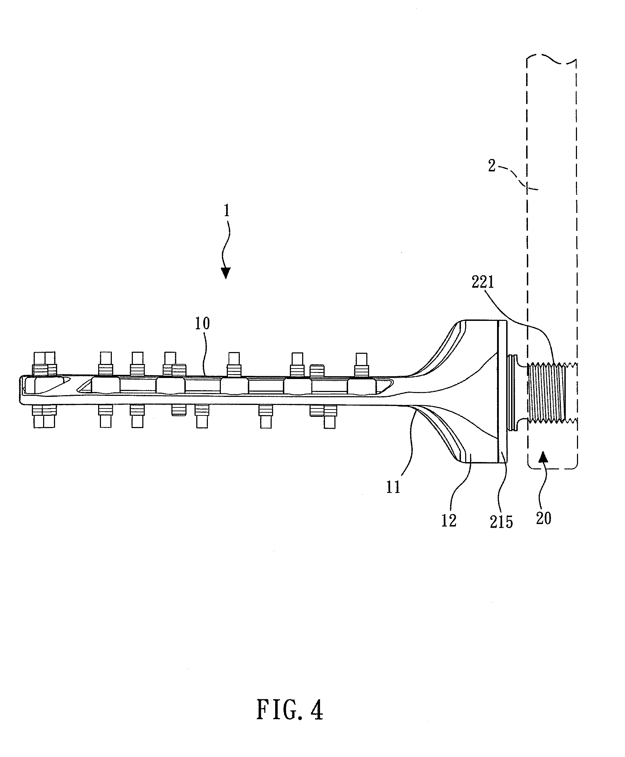

Referring to **Figure 1** through **Figure 5**, according to one embodiment of the present invention, a modularized bicycle pedal **1** is adaptive to be rotatably coupled to a bicycle crank **2.** The modularized bicycle pedal **1** comprises a pedal body **10**, a shaft module **20** and a bearing **30.**

The pedal body **10** has one connecting side **11** for connecting the crank **2** on which a socket portion **12** is provided. Preferably, the socket portion **12** is formed with an internal threaded segment **121** and the socket portion **12** has centrally a socket **13** defined by a circular wall **131** and an end wall **132**.

The shaft module **20** includes a circular enclosure **21**, a shaft core **22**, a plurality of rolling units **23**, a circular ball retainer **24** and an oil seal **25**.

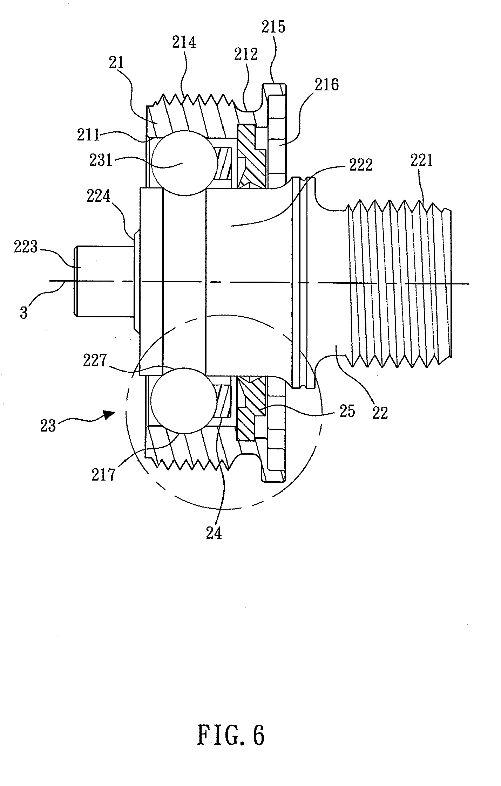

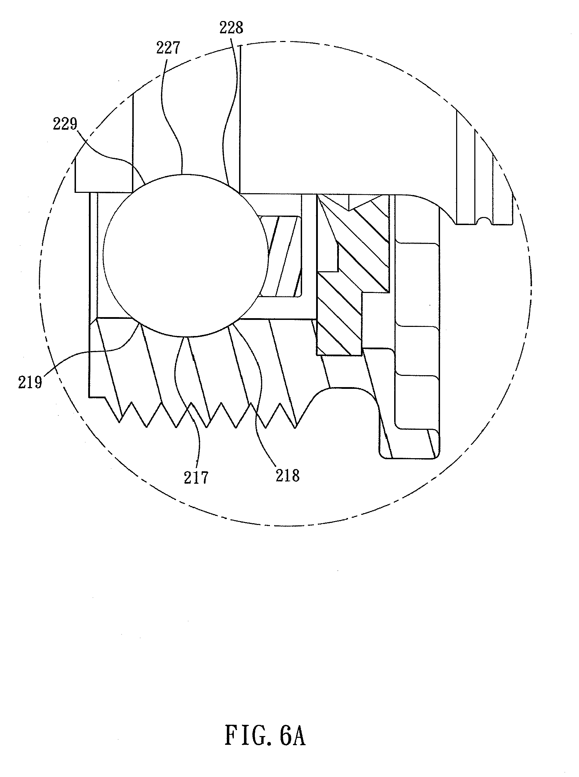

Now referring to **Figure 6**, the enclosure **21** has a circular inner surface **211** and a circular outer surface **212**. The circular inner surface **211** defines a through hole **213**, while the circular outer surface **212** is formed with an external threaded segment **214**. Thereby, when the enclosure **21** is assembled to the socket portion **12**, the enclosure **21** and the socket portion **12** are screwedly engaged with each other, so the shaft module **20** is connected to the pedal body **10**. Preferably, the enclosure **21** further has a radially extended lip portion **215**. The lip portion **215** has a non-circular profile **216**, such as a saw-toothed profile, as shown, or a polyhedral or wavy profile, so that a specific driver (not shown) matches the non-circular profile **216** can be used to rotate and engage the enclosure **21** against and with the socket portion **12**.

The shaft core **22**, after the foregoing assembling operation, protrudes into the through hole **213**. The shaft core **22** has a connecting segment **221** for connecting the crank **2**, a first sustaining segment **222** facing the circular inner surface **211** and a second sustaining segment **223**. The connecting segment **221** may be connected to the crank **2** by means of, for example, threads. The first sustaining segment **222** is located between the connecting segment **221** and the second sustaining segment **223**, while the second sustaining segment **223** is located within the socket **13**. Preferably, the first sustaining segment **222** is larger than the second sustaining segment **223** in diameter. Additionally, the shaft core **22** has a retaining surface **224** located between the first and second sustaining segments **222**, **223.** The retaining surface **224** is perpendicular to an axis **3**.

The rolling units **23** are rotatably sandwiched by the circular inner surface **211** and the first sustaining segment **222**, so that the shaft core **22** is allowed to rotate against the axis **3** with respect to the enclosure **21.** Further referring to **Figure 6A**, the rolling units **23** preferably include plural spherical balls **231**, and the circular inner surface **211** has a circular first ball groove **217**, while the first sustaining segment **222** has a circular second ball groove **227**. Each of the balls **231** is configured to abut against the first, second ball grooves **217**, **227.** The first ball groove **217** has a first outer sidewall **218** near the crank **2** and a first inner sidewall **219** near the pedal body **10**, while the second ball groove **227** has a second outer sidewall **228** near the crank **2** and a second inner sidewall **229** near the pedal body **10**. The first and second outer sidewalls **218, 228** and the first and second inner sidewalls **219**, **229** jointly press on the balls **231** so as to prohibit the enclosure **21** from moving axially with respect to the shaft core **22.**

The ball retainer **24** has a plurality of separated ball seats **241**, each for receiving one said ball **231**, thereby positioning the balls **231** with respect to their adjacent balls **231** and in turn making the balls **231** bearing force uniformly.

The oil seal **25** arranged between the rolling units **23** and the connecting segment **221** may be circular to seal a gap between the enclosure **21** and the shaft core **22** that otherwise is open to the crank **2**, thereby preventing lubricant inside the shaft module **20** from leaking out and preventing foreign articles from intruding into the space between the enclosure **21** and the shaft core **22.**

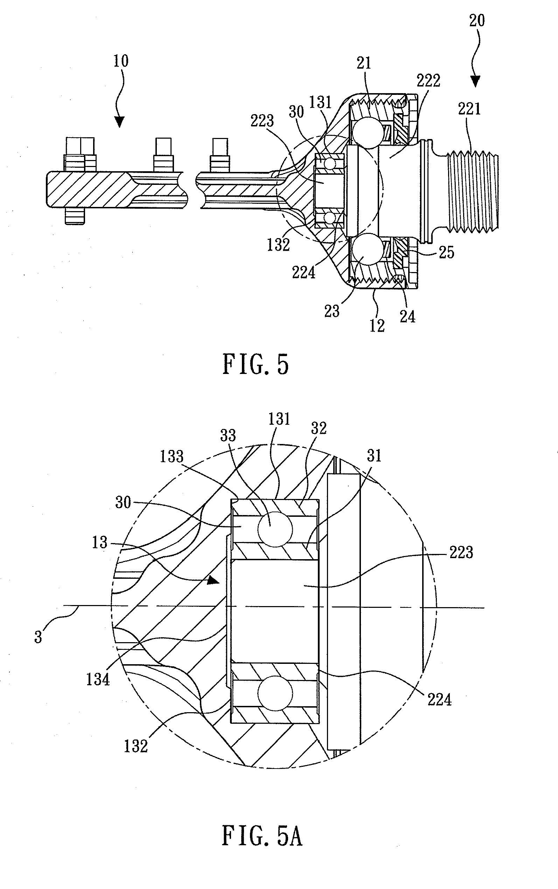

The bearing **30** is rotatably sandwiched by the circular wall **131** and the second sustaining segment **223**. Preferably, the bearing **30** is fittingly received between the retaining surface **224** and the end wall **132** of the socket **13**. For example, as the enclosure **21** and the socket portion **12** are screwed together, the bearing **30** is increasingly pushed toward and finally abut against the end wall **132**, so the bearing **30** is retained from moving axially with respect to the shaft core **22**. Further referring to **Figure 5A**, the bearing **30** preferably includes an inner ring **31**, an outer ring **32** and plural rolling units **33** between the inner and outer rings **31**, **32.** The inner and outer rings **31**, **32** are configured to rotate with respect to each other against the axis **3**. The inner ring **31** is mounted around the second sustaining segment **223**, and the outer ring **32** is inlaid in the circular wall **131** of the socket **13**. The end wall **132** of the socket **13** has a pressing segment **133** and a non-pressing segment **134**. The pressing segment **133** immediately abuts against the outer ring **32** in the axial direction, and the non-pressing segment **134** does not contact the bearing **30**, while the retaining surface **224** immediately abuts against the inner ring **31** in the axial direction, thereby further reduce resistance to the rotation of the shaft core **22** with respect to the pedal body **10.**

With the foregoing features, the present invention provides following improvements.

First, the shaft module can be preassembled and this modularized assembly can be easily transported and stored. In the event that the shaft module is consumed, it can be easily disassembled and get replaced by a new shaft module.

Second, in the present invention, the rolling units serve to not only allow axial displacement between the shaft core and the enclosure, but also prohibit the enclosure and the shaft core from moving axially with respect to each other. In other words, the rolling units as disclosed works conventionally to allow rotation, and works uniquely to position two adjacent components. On the other hand, in a traditional shaft module, the bearing only serves to allow rotation, and is not designed to provide any additional function such as prohibiting the enclosure and the shaft core from axial movement, so at least one additional screw has to be used to fix the enclosure with the shaft core. Since the present invention eliminates the use of such one or more screws, the disclosed shaft module is structurally simpler as compared with the prior-art device.

Third, the present invention integrates the bearing otherwise provided separately into the shaft module. In other words, the present invention makes the rolling units immediately located between the enclosure and the shaft core, so the resultant shaft module can have significantly reduced length, volume and weight, thereby catering to the consumers' needs better.

Forth, since the present invention implements the rolling units instead of the traditional bearing, pedal manufactures can save some costs for sourcing bearings, and thereby have a higher profit margin.

Fifth, because the disclosed shaft module is merely provided at one side of the pedal body, the rest part of the pedal body can have reduced thickness. This allows the pedal to be light. Also, the thin pedal is less likely to hinder the cyclist when he/she is making turns on the bicycle.

The present invention has been described with reference to the preferred embodiments and it is understood that the embodiments are not intended to limit the scope of the present invention. Moreover, as the contents disclosed herein should be readily understood and can be implemented by a person skilled in the art, all equivalent changes or modifications which do not depart from the concept of the present invention should be encompassed by the appended claims.

## Claims

1. A modularized bicycle pedal (1) being adaptive to be rotatably coupled to a bicycle crank (2), the modularized bicycle pedal (1) comprising a pedal body (10) having a connecting side (11) for connecting the crank (2) and a socket portion (12) provided at the connecting side (11), and a shaft module (20), and the modularized bicycle pedal (1) being **characterized in**:
the shaft module (20) including a circular enclosure (21), a shaft core (22) and a
plurality of rolling units (23), the enclosure (21) having a circular inner surface (211) that defines a through hole (213), the enclosure (21) being received in the socket portion (12) and coupled to the pedal body (10), the shaft core (22) protruding into the through hole (213), the shaft core (22) having a connecting segment (221) near the crank (2) and a first sustaining segment (222) facing the circular inner surface (211), the connecting segment (221) being connected to the crank (2), and the rolling units (23) being rotatably sandwiched by the circular inner surface (211) and the first sustaining segment (222), so that the shaft core (22) is allowed to rotate with respect to the enclosure (21) against an axis (3).

2. The modularized bicycle pedal (1) of claim 1, being **characterized in that** the rolling units (23) comprise a plurality of spherical balls (231), the circular inner surface (211) having a circular first ball groove (217), the first sustaining segment (222) having a circular second ball groove (227), each said ball (231) abutting against the first and second ball grooves (217, 227), the first ball groove (217) having a first outer sidewall (218) near the crank (2) and a first inner sidewall (219) near the pedal body (10), the second ball groove (227) having a second outer sidewall (228) near the crank (2) and a second inner sidewall (229) near the pedal body (10), and the first and second outer sidewalls (218, 228) and the first and second inner sidewalls (219, 229) abutting against the balls (231), thereby preventing the enclosure (21) and the shaft core (22) from axially moving with respect to each other.

3. The modularized bicycle pedal (1) of claim 2, being **characterized in that** the shaft module (20) further comprises a circular ball retainer (24) that has a plurality of separate ball seats (241) for each receiving one said ball (231) therein.

4. The modularized bicycle pedal (1) of claim 1, being **characterized in** further comprising a bearing (30), the socket portion (12) being centrally formed with a socket (13) that is defined by a circular wall (131) and an end wall (132) facing the crank (2), the shaft core (22) further having a second sustaining segment (223) that is near the pedal body (10), the second sustaining segment (223) being located within the socket (13), and the bearing (30) being rotatably sandwiched by the circular wall (131) and the second sustaining segment (223).

5. The modularized bicycle pedal (1) of claim 4, being **characterized in that** the shaft core (22) has a retaining surface (224) that is perpendicular to the axis (3) and located between the first and second sustaining segments (222, 223), such that the bearing (30) is fittingly held between the retaining surface (224) and the end wall (132) of the socket (13), whereby the bearing (30) is retained from axially moving with respect to the shaft core (22).

6. The modularized bicycle pedal (1) of claim 5, being **characterized in that** the bearing (30) comprises an inner ring (31), an outer ring (32) and the plural rolling units (23) located between the inner and outer ring (31, 32), the inner and outer rings (31, 32) being configured to rotate with respect to each other against the axis (3), the inner ring (31) being mounted around the second sustaining segment (223), the outer ring (32) being inlaid in the circular wall (131) of the socket (13), the end wall (132) of the socket (13) having a pressing segment (133) and a non-pressing segment (134), the pressing segment (133) axially abutting against the outer ring (32) immediately, the non-pressing segment (134) not contacting the bearing (30), and the retaining surface (224) axially abutting against the inner ring (31) immediately.

7. The modularized bicycle pedal (1) of claim 1, being **characterized in that** the socket portion (12) is further formed with an internal threaded segment (121), and the enclosure (21) further has a circular outer surface (212) that is formed with an external threaded segment (214), so that the enclosure (21) and the socket portion (12) are screwedly coupled through the internal and external threaded segments (121, 214).

8. The modularized bicycle pedal (1) of claim 7, being **characterized in that** the enclosure (21) includes a radially extended lip portion (215) that has a non-circular profile for a matching driver to rotate the enclosure (21) with respect to the socket portion (12).

9. The modularized bicycle pedal (1) of claim 1, being **characterized in that** the shaft module (20) further comprises an oil seal (25) located between the rolling units (23) and the connecting segment (221).
